# EUROPÄISCHE PATENTANMELDUNG

(11) **EP 1 362 773 A2**
(43) Veröffentlichungstag der Anmeldung: **19.11.2003**
(21) Anmeldenummer: 03010332.9
(22) Anmeldetag: 08.05.2003
(51) Int. Cl.: B62D 55/125, B62D 55/24

(54) **Antriebssystem für Raupenfahrzeug**

(30) Priorität: 17.05.2002 DE 10222602; 03.06.2002 DE 10224658
(71) Anmelder: MACMOTER S.p.A., I-47015 Modigliana (FO) (IT)
(72) Erfinder: Haringer, Alois, 39044 Neumarz (BZ) (IT)
(74) Vertreter: Schieferdecker, Lutz, Dipl.-Ing.

(57) **Zusammenfassung**

Die Erfindung betrifft ein Raupenfahrzeug mit glatten, die Zugkraft kraftschlüssig auf Raupen 3, 4 und insbesondere auf Gummiraupen übertragenden Antriebs- und Umlenkrädern 6, 7, 8 beziehungsweise 9, die mit Hilfe eines Rahmens 3 gelagert sind, der mindestens einen Antriebsmotor 11 trägt.

Der Kern der Erfindung besteht darin, daß zur Vermeidung des Durchrutschens der Raupen auf den Antriebs- und Umlenkrädern sowohl die beiden vorderen Umlenkräder 6, 7 als auch die beiden hinteren Umlenkräder 8, 9 jeweils angetrieben sind (Fig. 1).

## Beschreibung

Die Erfindung betrifft ein Raupenfahrzeug mit glatten, die Zugkraft kraftschlüssig auf Raupen, insbesondere auf Gummiraupen übertragenden Antriebs- und Umlenkrädern, die mit Hilfe eines Rahmens gelagert sind, der mindestens einen Antriebsmotor trägt.

Raupenfahrzeuge der genannten Art mit Gummiraupen sind grundsätzlich bekannt und weisen einerseits verschiedene Vorteile auf, denen andererseits der Nachteil gegenübersteht, daß die Raupen auf den glatten Umlenk- und Antriebsrädern bei feuchter Witterung durchrutschen können. Verstärkt wird dieser Effekt insbesondere dann, wenn zur Feuchtigkeit noch Verschmutzungen hinzukommen, die wie ein Gleitmittel wirken.

Der Erfindung liegt daher die Aufgabe zugrunde, Maßnahmen vorzusehen, mit deren Hilfe ein Durchrutschen der Raupen auf den glatten Umlenk- und Antriebsrädern minimiert beziehungsweise verhindert werden kann.

Zur Lösung dieser Aufgabe sieht die Erfindung vor, daß die beiden vorderen Umlenkräder und die beiden hinteren Umlenkräder der Raupen angetrieben sind und somit zugleich als Antriebsräder dienen. Die Zuordnung des Antriebes zu jedem Umlenkrad und somit die Ausgestaltung eines jeden Umlenkrades zugleich als Antriebsrad führt im Ergebnis dazu, daß der Durchrutscheffekt der Gummiraupen auf den Antriebsrädern minimiert ist. Die üblicherweise vorhandene Spannung, mit der die Raupen auf den Umlenk- und Antriebsrädern gehalten werden, reicht bei einem Vierradantrieb aus, um eine einwandfreie Funktion der Raupen auch bei feuchtem oder verschmutztem Zustand zu gewährleisten.

Im Ergebnis handelt es sich somit um einen Vierrad-Antrieb mit einer vorzugsweise mechanischen Kraftübertragung auf die gegebenenfalls einen größeren Durchmesser aufweisenden hinteren Umlenkräder und mit einer hydraulischen Kraft- beziehungsweise Energieübertragung auf die einen gegebenenfalls kleineren Durchmesser aufweisenden vorderen Umlenkräder.

Grundsätzlich können in Weiterbildung der Erfindung aber auch jeweils ein Hydraulikmotor jedem der vier Umlenkräder zugeordnet sein, wobei vorzugsweise ferner Untersetzungen/Untersetzungsgetriebe den vorderen Antriebs- und Umlenkrädern zugordnet sein können, wenn die hinteren Antriebs- und Umlenkräder einen größeren Durchmesser aufweisen als die vorderen Antriebs- und Umlenkräder.

Weitere Merkmale der Erfindung gehen aus Unteransprüchen und der Beschreibung im Zusammenhang mit der Zeichnung hervor.

Die Erfindung wird nachstehend anhand von Auführungsbeispielen, die in der Zeichnung dargestellt sind, näher beschrieben. Dabei zeigen:
- Fig. 1:: eine Prinzipskizze des Antriebes für alle vier Antriebs- und Umlenkräder eines Raupenfahrzeuges;
- Fig. 2:: eine Prinzipskizze einer Seitenansicht des Fahrwerkes einer Raupe mit gleich großen vorderen und hinteren Antriebs- und Umlenkrädern;
- Fig. 3:: eine Ansicht ähnlich der von Fig. 2 mit unterschiedlich großen Antriebs- und Umlenkrädern vorn beziehungsweise hinten;
- Fig. 4:: eine Seitenansicht eines Antriebs- und Umlenkrades in größerem Maßstab;
- Fig. 5:: eine Ansicht des Antriebs- und Umlenkrades gemäß Fig. 4 mit Blick auf seinen Umfang;
- Fig. 6:: eine Seiten- beziehungsweise Stirnansicht des Antriebs- und Umlenkrades gemäß Fig. 4 von dessen zweiten Seite;
- Fig. 7:: schematisch eine Draufsicht auf den Antrieb und die Antriebs- und Umlenkräder eines abgewandelten Ausführungsbeispieles ohne Raupen, wobei die hinteren Antriebs- und Umlenkräder einen größeren Durchmesser aufweisen als die vorderen,
- Fig. 8:: eine Ansicht wie in Fig. 7 mit Raupen und
- Fig. 9:: eine der Fig. 8 entsprechende Darstellung eines weiteren Ausführungsbeispieles, bei dem die vorderen und hinteren Antriebs- und Umlenkräder gleich groß sind, jeweils über Hydraulikmotore angetrieben sind und ferner auch Bremsleitungen dargestellt sind.

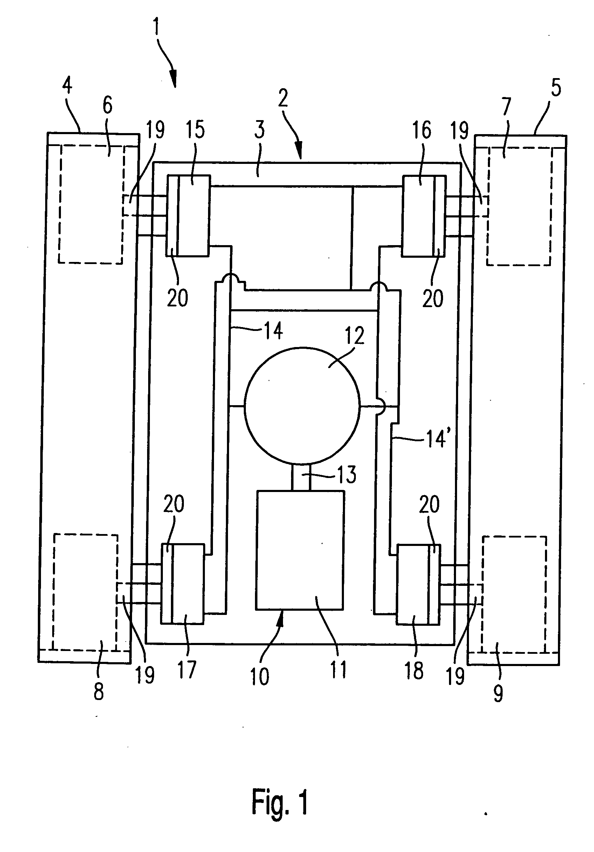

Ein Raupenfahrzeug 1, von dem in Fig. 1 nur Teile des Unterfahrzeuges 2 mit einem Rahmen 3 prinzipmäßig dargestellt sind, umfaßt zwei Raupen 4 und 5 mit zugehörigen vorderen und hinteren Antriebs- und Umlenkrädern 6 und 7 beziehungsweise 8 und 9. Die Raupen 3 und 4 sind vorzugsweise Gummiraupen. Sie können grundsätzlich aber auch aus einem anderen Werkstoff bestehen. Wesentlich ist, daß sie auf glatten, die Zugkraft kraftschlüssig übertragenden Antriebs- und Umlenkrädern 6 - 9 angeordnet sind.

Der Antrieb 10 des Raupenfahrzeuges 1 umfaßt einen Antriebsmotor 11, der ebenfalls auf dem Rahmen 3 angeordnet ist. Der Antriebsmotor 11 ist zweckmäßigerweise ein Verbrennungsmotor. Eine Pumpe 12 ist mit dem Antriebsmotor 11 über eine Welle 13 verbunden und erzeugt hydraulische Energie, die zur Energieversorgung von Antriebseinheiten 15 und 16 beziehungsweise 17 und 18 dienen. Die Hydraulikleitungen 14 führen einerseits von der Pumpe 12 zu allen Antriebseinheiten 15 - 18 und weitere Hydraulikleitungen 14' führen wiederum von den Antriebseinheiten 15 - 18 zurück zur Pumpe 12.

Grundsätzlich ebenfalls erforderliche Ventile und Steuereinrichtungen sind bekannt und in Fig. 1 der Übersicht wegen nicht dargestellt.

Die vier Antriebseinheiten 15 - 18 sind Hydraulikmotore, die die zugeführte hydraulische Energie in Rotationsenergie umwandeln und mit Hilfe einer Welle 19 an die Antriebs- und Umlenkräder 6 - 9 abgeben.

Sofern erforderlich ist ferner jeweils eine Untersetzung 20/ein Untersetzungsgetriebe jeder Antriebseinheit 15 - 18 zugeordnet, wie dies ebenfalls schematisch aus Fig. 1 hervorgeht.

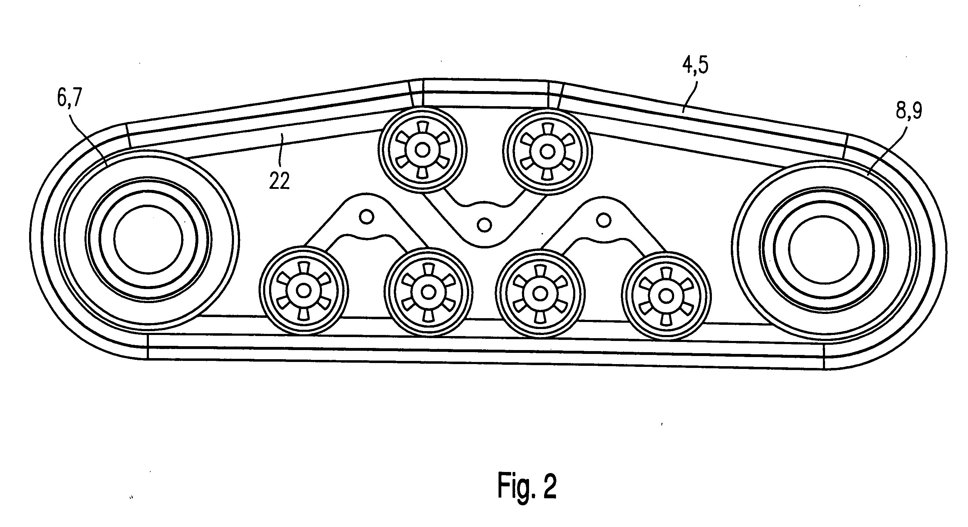

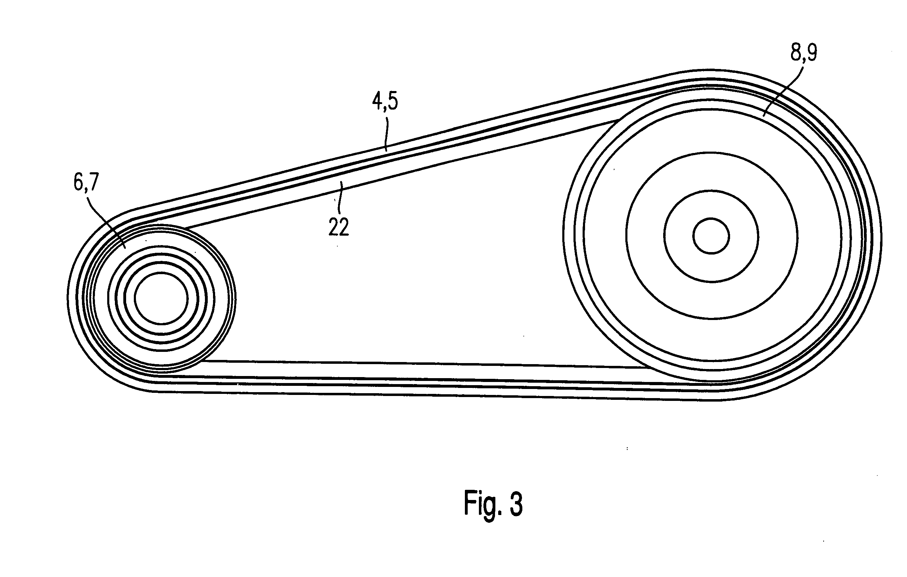

Bei dem in Fig. 2 dargestellten Auführungsbeispiel sind die vorderen Antriebs- und Umlenkräder 6 beziehungsweise 7 und die hinteren Antriebs- und Umlenkräder 8 beziehungsweise 9 jeweils gleich groß. Eine gleiche Größe beziehungsweise ein gleicher Durchmesser sind jedoch nicht zwingend notwendig. So können auch die vorderen Antriebs- und Umlenkräder 6 beziehungsweise 7 deutlich kleiner sein als die hinteren Antriebs- und Umlenkräder 8 beziehungsweise 9, wie die Prinzipskizze gemäß Fig. 3 zeigt.

Grundsätzlich sind auch nicht in allen Fällen Untersetzungen 20 an jeder der Antriebseinheiten 15 - 18 notwendig. Derartige Untersetzungen sind in der Regel nur dann erforderlich, wenn die Antriebs- und Umlenkräder vorn beziehungsweise hinten unterschiedlich groß sind.

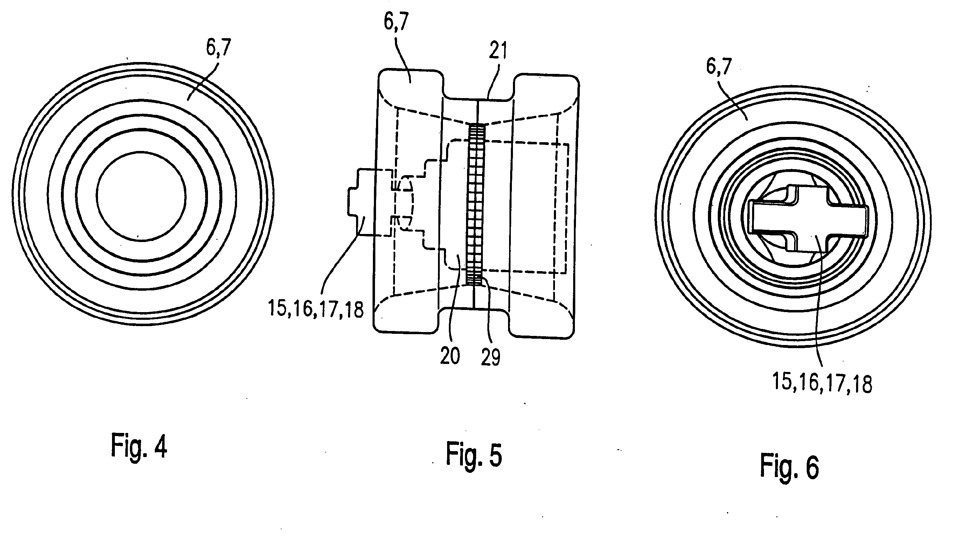

Ferner zeigen die Fig. 4 - 6 ein Antriebs- und Umlenkrad in drei Ansichten von vorne und hinten beziehungsweise von der Seite. Dabei ist deutlich gemäß Fig. 5 eine mittig angeordnete Rille 21 beziehungsweise eine Umfangsnut zur sicheren Führung der Raupe 4 beziehungsweise 5 zu erkennen. Die rillenförmige Vertiefung 21 dient zur Aufnahme einer Längsrippe 22 auf der den Antriebs- und Umlenkräder 6 - 9 zugeordneten Seite der Raupen 4, 5.

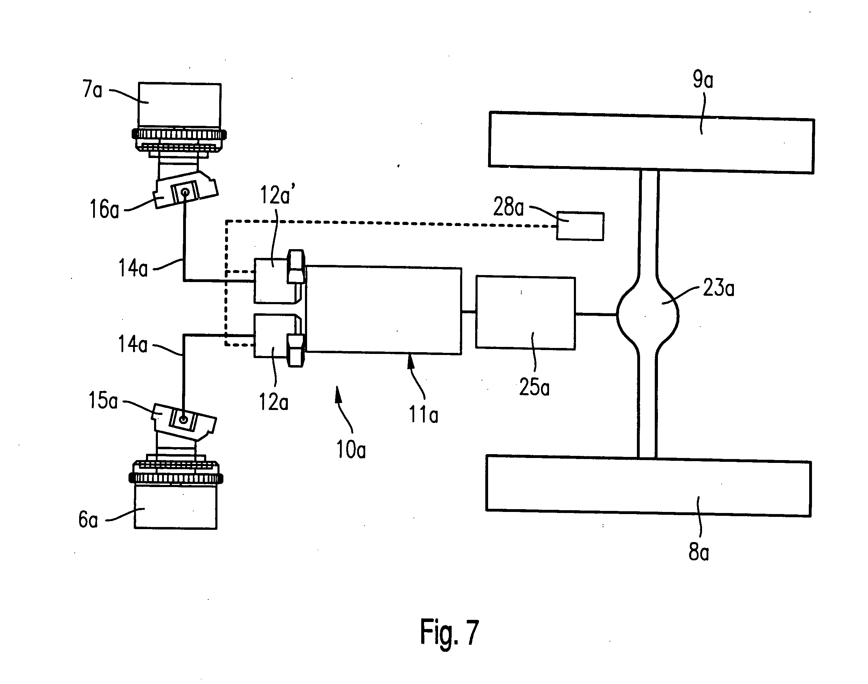

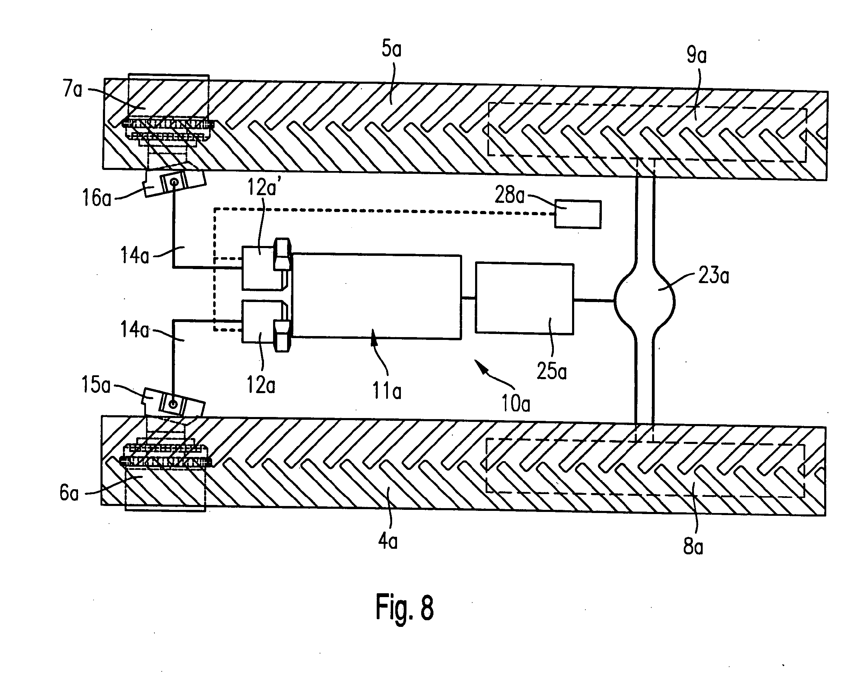

Die beiden Fig. 7 und 8 zeigen schematisch ein Ausführungsbeispiel mit einem Antrieb 10a, der ebenfalls einen Antriebsmotor 11a in Gestalt eines Verbrennungsmotors umfaßt. Grundsätzlich gleiche Teile wie bei dem zuerst beschriebenen Ausführungsbeispiel weisen dieselben Bezugszahlen und zusätzlich den Buchstabenindex a auf.

Der Antriebsmotor 11a überträgt bei dem in den Fig. 7 und 8 dargestellten Ausführungsbeispiel die Antriebsenergie ausschließlich mechanisch auf die beiden hinteren Antriebs- und Umlenkräder 8a und 9a und die beiden Raupen 4a und 5a. Dazu sind übliche Komponenten wie Getriebe, Differenzial und so weiter als Antriebselemente vorgesehen und bilden Antriebseinheiten (Differenzial 23a).

Ferner treibt der Antriebsmotor 11a mindestens eine und gemäß Ausführungsbeispiel zwei Pumpen 12a und 12a' zur Erzeugung von hydraulischer Energie an.

Über Hydraulikleitungen 14a, die in den Fig. 7 und 8 nur schematisch und nicht vollständig dargestellt sind, wird die hydraulische Energie der Pumpen 12a und 12a' auf Antriebseinheiten 15a und 16a übertragen, die den beiden vorderen Antriebs- und Umlenkräder 6a und 7a zugeordnet sind. Diese Antriebseinheiten 15a und 16a sind Hydraulikmotore.

Zu den beiden Hydraulikmotoren gehören ferner zweckmäßigerweise Untersetzungen beziehungsweise Untersetzungsgetriebe, da die beiden vorderen Antriebs- und Umlenkräder 6a und 7a einen kleineren Durchmesser aufweisen als die hinteren Antriebs- und Umlenkräder 8a und 9a.

Diese Untersetzungsgetriebe sind in die Hydraulikmotore unmittelbar integriert und daher in den Fig. 7 und 8 nicht gesondert dargestellt.

Die Erfindung ist schließlich nicht auf die in den Fig. dargestellten Ausführungsbeispiele beschränkt. Vielmehr sind auch noch Abwandlungen möglich, ohne von dem Erfindungsgedanken abzuweichen.

So ist die Erfindung nicht auf mechanische und/oder hydraulische Antriebe beschränkt. Anstelle eines hydraulischen Antriebes ist gleichermaßen ein elektrischer Antrieb zur Verwirklichung der Erfindung geeignet. Aber auch ein Antrieb nur mit Hilfe eines Verbrennungsmotors und ohne Einschaltung hydraulischer Komponenten gestattet eine Verwirklichung der Erfindung. Diese Varianten sind zwar weder in der Beschreibung näher erläutert noch in den Fig. dargestellt, doch grundsätzlich möglich und werden aus diesem Grund von dem Erfindungsgedanken erfaßt.

Schließlich eignet sich die Erfindung nicht nur zur Verwendung bei Baufahrzeugen, sondern insbesondere auch bei landwirtschaftlichen Fahrzeugen (Traktoren). Vor allem hier kommt noch hinzu, daß sowohl neue, Raupen aufweisende Fahrzeuge mit dem erfindungsgemäßen Vierrad-Antrieb ausgestattet werden können als auch daß bereits im Einsatz befindliche Fahrzeuge mit den erfindungsgemäßen Antriebseinheiten an den vorderen Umlenkrädern zusätzlich beziehungsweise nachträglich ergänzt werden können.

Vor allem die Pumpe 12 beziehungsweise die Pumpen 12a, 12a' in Verbindung mit den zugehörigen Hydraulikleitungen 14a und den notwendigen Ventilen und Steuereinrichtungen sowie mit den als Antriebseinheiten 15a und 16a dienenden Hydraulikmotoren einschließlich Getrieben an den vorderen Antriebs- und Umlenkrädern 6a und 7a können als Teile einer Nachrüst-Einheit für bereits im Einsatz befindliche Raupenfahrzeuge der hier interessierenden Art zur Verfügung gestellt werden.

Von Bedeutung ist schließlich, daß der hydraulische Antrieb für die vorderen Antriebs- und Umlenkräder nicht ständig wirksam sein muß. Es genügt, wenn der Antrieb für die vorderen Umlenkräder bei Bedarf und somit wahlweise zuschaltbar ist beziehungsweise auf ihn zeitweise verzichtet werden kann. Die Zuschaltung erfolgt auf elektrischem beziehungsweise auf elektronischem Wege. Hierzu ist eine besondere Steuereinrichtung beziehungsweise es sind besondere Komponenten für die Steuereinrichtung hierzu vorgesehen.

Erhöhte Bedeutung besitzt die besondere Zuschaltung der Antriebseinheiten für die vorderen Antriebs- und Umlenkräder insbesondere bei niedrigen Fahrgeschwindigkeiten. Die Zuschaltung ist bei hohen Fahrgeschwindigkeiten in der Regel ohne Bedeutung. Die Ansteuerung der Antriebe für die vorderen Antriebs- und Umlenkräder erfolgt daher vorzugsweise elektrisch beziehungsweise elektronisch gesteuert auch nur bei niedrigen Drehzahlen der Antriebs- und Umlenkräder und gegebenenfalls dann, wenn durch Durchrutschen bedingt unterschiedliche Raupengeschwindigkeiten vorliegen.

Die Antriebseinheiten 15 - 18 sind im Falle des in Fig. 1 dargestellten Auführungsbeispieles ebenfalls Hydraulikmotore wie im Falle der Antriebseinheiten 15a und 16a des in den Fig. 7 und 8 dargestellten Ausführungsbeispieles. Da die hinteren Antriebs- und Umlenkräder 8a und 9a (Fig. 7 und 8) eine mechanische Kraftübertragung mit einem Differential 23 aufweisen, sind dort vorzugsweise in den Fig. nicht dargestellte Bremsen vorgesehen. Dies gilt zum Beispiel insbesondere für den Fall einer Umrüstung von einem Traktor zu einem Raupenfahrzeug.

Ferner sind ein Getriebe 25a und ein Steuerknüppel beziehungsweise Lenkrad 28a vorgesehen und schematisch in den Fig. 7 und 8 dargestellt, ebenso wie dies für einen Zahnkranz 29 in Fig. 5 gilt.

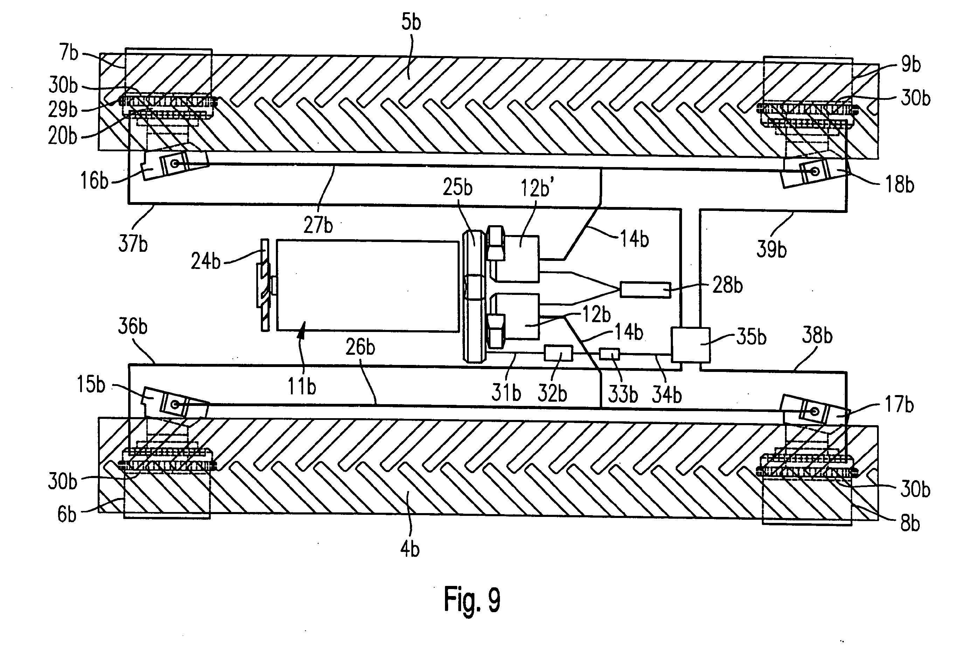

Das Raupenfahrzeug gemäß Fig. 9 weist zwei Raupen 4b und 5b auf, die über Antriebs- und Umlenkräder 6b und 7b beziehungsweise 8b und 9b umlaufen. Der Antriebsmotor 11b ist mit einem Gebläse 24b versehen und treibt über ein Getriebe 25b zwei Pumpen 12b und 12b' an. Von der Pumpe 12b' führte eine Hydraulikleitung 14b zur linken Verteilleitung 26b, die an die linksseitigen Antriebseinheiten 15b und 17b (Hydraulikmotore) angeschlossen ist. In entsprechender Weise führt von der Pumpe 12b' eine Hydraulikleitung 14b zu einer rechten Verteilleitung 27b, die an die rechtsseitigen Antriebseinheiten 16b und 18b (Hydraulikmotore) angeschlossen ist. Den Pumpen 12b, 12b' ist ein Steuerknüppel oder Lenkrad 28b zugeordnet, um im Bedarfsfall (Kurvenfahrt) die beiden Pumpen 12b und 12b' mit unterschiedlicher Leistung und damit die linksseitigen und die rechtsseitigen Antriebseinheiten mit unterschiedlicher Geschwindigkeit anzutreiben.

Die Antriebseinheiten 15b - 18b stehen jeweils über eine Untersetzung 20b und einen Zahnkranz 29b in Antriebseingriff mit den Antriebs- und Umlenkrädern 6b - 9b. Jedem Antriebs- und Umlenkrad 6b - 9b ist eine Mehrscheibenbremse 30b zugeordnet, die hydraulisch betätigbar ist. Dazu ist an das Getriebe 25b über eine Pumpenwelle 31b eine Hydraulikpumpe 32b angeschlossen. Die Hydraulikpumpe 32b, der ein Vorratsbehälter 33b für Hydraulikflüssigkeit zugeordnet ist, ist über eine Hauptbremsleitung 34b an eine Bremsenauswahleinrichtung 35b angeschlossen, von der hydraulische Bremsleitungen 36b, 37b, 38b und 39b zu den einzelnen Mehrscheibenbremsen 30b führen. Ein linksseitiges beziehungsweise rechtsseitiges Abbremsen der Antriebs- und Umlenkräder 6b und 8b beziehungsweise 7b und 9b unterstützt den vorbeschriebenen Lenkvorgang mittels des Steuerknüppels oder Lenkrads 28b.

In den Fig. 1 sowie 7 und 8 sind Bremseinrichtungen nicht dargestellt, jedoch können entsprechende Bremsvorrichtungen wie anhand von Fig. 9 beschrieben vorgesehen sein.

## Patentansprüche

1. Raupenfahrzeug mit glatten, die Zugkraft kraftschlüssig auf Raupen (3, 4) und insbesondere auf Gummiraupen übertragenden Antriebs- und Umlenkrädern (6, 7, 8, 9), die mit Hilfe eines Rahmens (3) gelagert sind, der mindestens einen Antriebsmotor (11) trägt, **dadurch gekennzeichnet,**
**daß** die beiden vorderen Umlenkräder (6, 7) und die beiden hinteren Umlenkräder (8, 9) jeweils angetrieben sind.

2. Raupenfahrzeug nach Anspruch 1, **dadurch gekennzeichnet, daß** Antriebseinheiten (15, 16, 17, 18) jedem der beiden vorderen Umlenkräder (6, 7) und den beiden hinteren Umlenkräder (8, 9) für die Raupen (4, 5) zugeordnet sind.

3. Raupenfahrzeug nach Anspruch 1, **dadurch gekennzeichnet, daß** der Antrieb (10, 10a) an den vorderen und/oder an den hinteren Antriebs- und Umlenkrädern ein mechanischer und/oder ein hydraulischer Antrieb ist.

4. Raupenfahrzeug nach Anspruch 1, **dadurch gekennzeichnet, daß** ein Antriebsmotor (11) und insbesondere ein Verbrennungsmotor für eine mechanische Kraftübertragung auf Antriebs- und Umlenkräder (8, 9) und/oder zum Antrieb von mindestens einer Pumpe (12) zur Versorgung von Antriebseinheiten an Antriebsund Umlenkrädern (6 - 9) mit hydraulischer Energie vorgesehen ist.

5. Raupenfahrzeug nach Anspruch 1, **dadurch gekennzeichnet, daß** eine Untersetzung (20)/ein Untersetzungsgetriebe mindestens jedem als Antriebseinheit (15a, 16a) dienenden Hydraulikmotor an den vorderen Antriebs- und Umlenkrädern (6a, 7a) zugeordnet ist.

6. Raupenfahrzeug nach Anspruch 1, **dadurch gekennzeichnet, daß** der Antrieb (10a) eine mechanische Kraftübertragung auf die hinteren Antriebs- und Umlenkräder (8a, 9a) und eine hydraulische Kraftübertragung auf die vorderen Antriebs- und Umlenkräder (6a, 7a) umfaßt.

7. Raupenfahrzeug nach Anspruch 1 und 6, **dadurch gekennzeichnet, daß** jeweils ein Hydraulikmotor als Antriebseinheit (15a, 16a) jedem der beiden vorderen Antriebs- und Umlenkräder (6a, 7a) zugeordnet ist.

8. Raupenfahrzeug nach Anspruch 1 und 6, **dadurch gekennzeichnet, daß** jeweils ein Hydraulikmotor als Antriebseinheit (15a, 16a) für jeden der beiden vorderen Antriebs- und Umlenkräder (6a, 7a) als Teil einer Nachrüst-Einheit vorgesehen ist.

9. Raupenfahrzeug nach Anspruch 1, **dadurch gekennzeichnet, daß** der Durchmesser der hinteren, jeweils angetriebenen Antriebsund Umlenkräder (8a, 9a) größer ist als der Durchmesser der vorderen, jeweils angetriebenen Antriebs- und Umlenkräder (6a, 7a) und daß je eine Untersetzung (20)/Untersetzungsgetriebe den vorderen Antriebs- und Umlenkrädern (6a, 7a) zugeordnet ist.

10. Raupenfahrzeug nach Anspruch 1, **gekennzeichnet durch** einen Vierrad-Antrieb mit vier Hydraulikmotoren als Antriebseinheiten (15 - 18) für die Antriebs- und Umlenkräder (6 - 9) der Raupen (4, 5).

11. Raupenfahrzeug nach Anspruch 1, **dadurch gekennzeichnet, daß** der mechanische Antrieb für die beiden hinteren Antriebs- und Umlenkräder (8a, 9a) ein Ausgleichsgetriebe/Differenzial zwischen diesen aufweist.

12. Nachrüst-Einheit für ein Raupenfahrzeug mit einem mechanischen Antrieb der hinteren Antriebs- und Umlenkräder (8a, 9a) für Raupen (4a, 5a), **gekennzeichnet durch** als Antriebseinheiten (15a und 16a) diendende Hydraulikmotore für die vorderen Umlenkräder (6a, 7a) sowie mindestens eine zugehörige Pumpe 12a, 12a' und Hydraulikleitungen 14a zum Antrieb **durch** einen vorhandenen Antriebsmotor 11a, insbesondere in Gestalt eines Verbrennungsmotors.
